# FASCICULE DE BREVET EUROPEEN

(11) **EP 1 993 828 B1**
(45) Date de publication et mention de la délivrance du brevet: **16.08.2017**
(21) Numéro de dépôt: 07727054.4
(22) Date de dépôt: 19.03.2007
(51) Int. Cl.: B32B 17/06, C03C 27/12, C09K 21/02, C01B 33/32, C09D 1/02

(54) **VITRAGE ANTI-FEU**
BRANDSCHUTZVERGLASUNG
FIRE-RESISTANT GLAZING

(30) Priorité: 20.03.2006 EP 06111412
(43) Date de publication de la demande: 26.11.2008
(73) Titulaire: AGC Glass Europe, 1348 Louvain-la-Neuve (BE)
(72) Inventeur: GOELFF, Pierre, B-6040 Jumet (BE)
(74) Mandataire: Le Vaguerèse, Sylvain Jacques
(86) Numéro de dépôt international: PCT/EP2007/052576
(87) Numéro de publication internationale: WO 2007/107541

(56) Documents cités:
- WO-A-00/50235
- WO-A-02/100636
- FR-A- 2 607 491
- FR-A1- 2 407 004
- US-A- 5 565 273
- US-A1- 2003 180 543

## Description

La présente invention concerne les vitrages anti-feu comprenant au moins une couche d'un silicate alcalin hydraté entre deux feuilles de verre, couche de silicate dont l'exposition au feu engendre la formation d'une mousse opaque qui s'oppose à la transmission des radiations et maintient les feuilles de verre auxquelles la ou les couches de silicate alcalin sont associées.

L'utilisation des silicates alcalins hydratés dans la fabrication des vitrages anti-feu s'effectue traditionnellement selon deux modes distincts. Le plus usuel comporte le séchage partiel d'une solution jusqu'à obtention d'une couche ou d'un film dont la teneur en eau est relativement faible, de 20 à 25% environ. Selon l'autre mode le silicate est sous forme d'un gel présentant une forte teneur en eau de l'ordre de 50%.

Ces deux types de produits diffèrent par leur composition, et par leurs propriétés.

Dans le deuxième mode de production selon les techniques antérieures, la formation du produit intumescent est obtenue par l'addition de produits qualifiés de "durcisseurs" ou "d'agents de réticulation" ("curing") aux solutions de silicates alcalins. Ces qualificatifs désignent de façon générique des produits qui favorisent la formation de polysilicates réticulés. Ils sont choisis soigneusement, de sorte qu'après leur addition à la solution de silicates alcalins, la composition durcit dans un temps relativement bref sans qu'il soit nécessaire de procéder à un séchage.

Pour ces produits, la composition avec ses additifs est le plus souvent coulée avant durcissement entre deux feuilles de verre délimitant un espace clos. Un joint situé à la périphérie des feuilles de verre les associe de façon étanche et maintient la composition pendant son durcissement.

Les deux modes de préparation indiqués ci-dessus montrent à l'expérience des variations sensibles dans les propriétés obtenues pour des compositions élémentaires supposées identiques. Les raisons de ces variations ne sont pas parfaitement élucidées. Les études menées par les inventeurs en suivant de façon continue les paramètres permettant de déterminer les espèces en présence, montrent une évolution complexe de celles-ci au cours du processus d'élaboration des compositions. Cette évolution apparaît sensible à la nature des matières premières de départ. En particulier les silicates alcalins industriels, à même composition élémentaire, ne conduisent pas à des propriétés constantes. Il semble que la nature ou la structure des silicates alcalins présents dans ces solutions soit susceptible d'évoluer notamment en raison de ce que l'on peut qualifier de "maturation". La nature exacte de cette évolution n'est pas établie. Une hypothèse est que ces silicates alcalins, dans les conditions qui sont celles de mise en oeuvre, s'associent sous forme de colloïdes dont les éléments sont plus ou moins volumineux en fonction du mode de préparation.

Quoiqu'il en soit, il est important de souligner que l'usage de solutions de silicates industriels sans précautions particulières, ne permet pas de garantir une qualité constante des produits obtenus à partir de ceux-ci.

L'invention propose de former des vitrages comprenant au moins une couche intumescente de silicate alcalin hydraté entre deux feuilles de verre, la composition conduisant sans séchage à cette couche comprenant l'utilisation d'une suspension aqueuse de silice colloïdale en quantité telle que la silice introduite avec cette suspension n'est pas inférieure à 25% de l'ensemble de la silice présente dans la composition finale. De façon préférée la quantité de silice colloïdale introduite représente au moins 35% de la silice totale présente dans le matériau de la couche intumescente, et de façon particulièrement préférée au moins 40%. Cette proportion peut s'élever à 60% ou plus.

Contrairement aux techniques antérieures dans lesquelles toute l'attention était portée sur le choix de la solution de silicate, selon l'invention c'est la formation des colloïdes constituant la composition finale qui est déterminante. Et si l'utilisation de solutions de silicates industrielles reste, pour partie au moins, intéressante en raison de leur coût relativement peu élevé, lorsque ces solutions font partie des matières premières, il apparaît nécessaire de bien maîtriser les conditions de leur mise en oeuvre. Il est aussi possible de remplacer, au moins en partie, les solutions de silicates alcalins industrielles par des compositions préparées à partir de produits spécifiquement choisis. Pour ceux-ci on préfère l'utilisation d'hydroxyde alcalin et de silice en suspension colloïdale aqueuse.

Lorsque le choix est fait néanmoins d'utiliser parmi les matières premières une solution industrielle de silicate alcalin, selon l'invention une part seulement de la silice provient de cette solution de silicate. En pratique cette part n'est pas supérieure à 60% et de préférence pas supérieure à 50%. Toute la silice peut même selon l'invention provenir de suspensions de silice colloïdale. Si le coût en est un peu plus élevé, les caractéristiques de ces produits étant parfaitement contrôlables, la régularité des propriétés obtenues en est beaucoup améliorée.

Bien entendu, il est possible de combiner pour une part variable la présence de silice provenant de solutions de silicates industrielles et celle de silice provenant de suspensions colloïdales, dans les limites indiquées ci-dessus.

Par ailleurs lorsque la part des silicates industriels est telle que la teneur en alcalins de ces silicates n'est plus suffisante pour atteindre les rapports SiO₂/M₂O dont il est traité plus loin, il est nécessaire d'en ajouter une quantité correspondante. Cet ajout d'alcalin est réalisé selon l'invention sous forme d'hydroxyde du ou des alcalins présents. L'hydroxyde utilisé est soit sous forme de solution concentrée, soit même sous forme de pastilles d'hydroxyde hydraté afin d'introduire dans la composition une quantité aussi limitée que possible d'eau.

Qu'il s'agisse de solutions de silicates industrielles ou d'une solution ad hoc obtenue en combinant des suspensions de silice colloïdale et des hydroxydes alcalins ou encore d'une composition mixte faisant intervenir des silicates industriels et le produit de la combinaison indiquée ci-dessus, cette composition à tous les stades de sa préparation doit permettre un stockage sans risque de prise en masse. La stabilité dépend de diverses conditions. Ces conditions concernent à la fois la teneur en eau, les proportions de silice et d'alcalins et aussi la température. Ces conditions rendent compte d'exigences contraires.

D'une part pour éviter le séchage de la composition finale utilisée pour constituer la couche intumescente il est nécessaire de limiter la teneur en eau à tous les stades de la préparation et donc celle des différents constituants.

On sait d'autre part que la solubilité des silicates alcalins dépend du rapport molaire SiO₂/M₂O. Plus ce rapport est élevé plus la solubilité est faible ou, plus précisément, plus la teneur en eau doit être élevée pour prévenir la formation de gel au cours du processus de préparation.

Ce sont ces raisons qui font que les solutions de silicates industrielles sont d'autant plus riches en eau que le rapport SiO₂/M₂O est plus élevé. Ainsi pour les silicates de sodium hydratés industriels, la teneur en eau est de l'ordre de 65% pour un rapport molaire de 3,3, de 45% pour un rapport qui n'est que 2.

L'adjonction de suspension de silice colloïdale introduit aussi nécessairement une certaine teneur en eau. Les suspensions de silice colloïdales disponibles dans le commerce ne renferment pas plus de 50% en poids de silice le reste étant de l'eau.

Pour parvenir simultanément aux conditions exposées plus loin de rapport SiO₂/M₂O relativement élevé, et de teneur en eau il apparaît nécessaire de procéder soit avec des silicates industriels à faible rapport molaire et faible teneur en eau, et d'ajouter une forte proportion de silice colloïdale concentrée, soit de constituer ces compositions à partir suspension de silice colloïdale et de solutions d'hydroxyde alcalin concentrées ou même sous forme de pastilles, ou encore de procéder en combinant ces deux façons.

Eventuellement selon l'invention il est aussi possible d'ajuster la teneur en eau des solutions de silicates industrielles de façon limitée, par exemple par une opération d'évaporation sous vide pour réduire la teneur en eau initiale de ces compositions.

La formation des compositions selon l'invention est commandée par les caractéristiques des couches intumescentes qu'il s'agit de préparer. Dans ce sens la composition doit présenter de préférence un caractère suffisamment réfractaire pour avoir un bon comportement au feu. Ce caractère exprimé par le rapport atomique SiO₂/M₂O, détermine la Tg de la mousse formée par réaction au feu du matériau constituant la couche. Plus le rapport est élevé, plus la Tg l'est également, autrement dit, plus haute est la température à laquelle la mousse se ramollit.

Inversement les silicates alcalins présentant les rapports molaires les plus élevés ne sont stables, c'est à dire restent liquides, que pour des solutions contenant une forte proportion d'eau. Si la présence d'eau, quelle que soit la forme sous laquelle elle est présente dans le matériau intumescent, est un élément important dans les mécanismes mis en oeuvre dans les épreuves au feu, les propriétés des vitrages fabriqués et leur permanence dans le temps nécessite de limiter la teneur en eau.

Les produits selon l'invention présentent un rapport molaire SiO₂/M₂O compris entre 3 et 4, de préférence entre 3,5 et 3,9, et de façon plus particulièrement préférée entre 3,6 et 3,9.

Quelle que soit sa forme dans le matériau intumescent, l'eau représente une teneur avantageusement comprise entre 40 et 55% en poids, de préférence de 44 à 50% et de façon particulièrement préférée de 46 à 48%.

De préférence selon l'invention les alcalins entrant dans la composition des matériaux intumescents sont soit le potassium soit le sodium soit encore un mélange des deux dans des proportions variables. On préfère cependant les silicates de potassium. Ces derniers, pour un rapport SiO₂/M₂O identique présente une Tg de mousse plus élevée que celle des silicates de sodium. Leur utilisation favorise donc les propriétés anti-feu. Par ailleurs les produits sont recherchés pour leur transparence. Les produits à base de silicates de potassium, particulièrement ceux formés de façon synthétique par réaction de silice colloïdale avec l'hydroxyde de potassium, restent bien transparents quelle que soit la teneur en eau par rapport au comportement analogue des silicates de sodium. Les possibilités de mise en oeuvre sont donc plus étendues avec les silicates de potassium.

Il est possible également selon l'invention d'utiliser des mélanges de silicate de potassium et de sodium. Les mélanges en question conduisent cependant à des Tg moins élevées que celles observées pour les silicates de potassium. Le mélange pour des proportions équivalentes de silicate de potassium et de sodium peut même conduire à une Tg inférieure à celle des deux silicates utilisés individuellement, le mélange constituant ce qui peut être assimilé à une forme d'eutectique.

Les compositions des matériaux intumescents peuvent encore renfermer des additifs connus pour améliorer leurs propriétés qu'il s'agisse de la tenue au feu, de la résistance au vieillissement ou de leurs propriétés mécaniques.

Traditionnellement l'adjonction dans la composition de glycérine ou d'un polyol, notamment d'éthylène glycol, est utilisée pour améliorer les caractéristiques mécaniques des couches intumescentes en leur conférant un certain supplément de plasticité. La teneur de ces adjuvants dans le matériau intumescent ne dépasse pas 10% en poids, et de préférence reste égale ou inférieure à 5%. La limitation de leur teneur est faite en particulier pour tenir compte de ce que la présence de ces produits de nature organique, peut avoir une incidence défavorable sur le comportement au feu lorsque cette teneur est trop élevée.

Des agents modifiant la composition du matériau de type siloxanes, tels que les TEOS (tétraméthyl siloxane) ou MTEOS (méthyl triéthyl siloxane) ou encore le DMDES (diméthyl diéthyl silane), peuvent aussi être utilisés pour améliorer notamment les qualités mécaniques des vitrages. Leur incorporation dans le matériau ne dépasse pas 3% en poids.

D'autres types d'additifs ont encore été proposés, et parmi ceux-ci divers agents tensioactifs qui favorisent le mouillage des feuilles de verre avec lesquelles la composition intumescente de silicate alcalin est en contact.

Le développement de mousses bien régulières est aussi favorisé par la présence de matériau tels que l'urée ou les amines comme le TMAH (tétraméthyl hydroxy amine). Ces composants ne représentent pas de préférence plus de 1% en poids de la couche intumescente.

Dans les modes de préparations il est important de contrôler la température des compositions. A différents stades la concentration en silicates alcalins est telle qu'une élévation significative de la température peut conduire à une rapide prise en masse qui interdirait la mise en oeuvre ultérieure. Les réactions des différents constituants silice colloïdale, silicates alcalins industriels et hydroxyde alcalin, sont très exothermiques. Il est donc utile de procéder au refroidissement de ces compositions au cours de leur constitution.

Le contrôle de la température est particulièrement nécessaire lorsque tous les composants sont réunis. A ce stade la composition ne reste fluide sur de longues périodes qu'en procédant à sa réfrigération. A moins de 5°C, les compositions peuvent rester fluides pendant plusieurs jours, alors qu'à la température de 20°C, ces compositions prennent en masse rapidement, et qu'au-dessus de 50°C cette prise en masse est pratiquement instantanée.

La constitution de la composition complète passe avantageusement par des étapes intermédiaires au cours desquelles la composition n'est pas ou est moins sensible à l'accroissement de température. Une façon de procéder est notamment de conserver le rapport molaire SiO₂/M₂O pas trop élevé jusqu'à une addition finale de silice colloïdale. Le cas échéant l'apport de silice colloïdale est réalisé entièrement lors de cette dernière étape.

Dans tous les cas, la composition doit demeurer fluide suffisamment longtemps pour permettre d'opérer les traitements suivant la réunion des différents constituants, comme le dégazage qui peut être nécessaire pour éliminer les bulles introduites au cours du mélange de ces constituants. La préparation est conduite avantageusement de sorte que la viscosité reste suffisamment faible pendant un temps qui n'est pas inférieur à 120mn.

Les vitrages anti-feu pouvant être obtenus par le procédé selon l'invention sont constitués comme indiqué précédemment en coulant la composition finale soit sur une feuille de verre maintenue horizontale et comportant à sa périphérie un cordon de rétention, soit directement entre deux feuilles réunies au moyen de ce même type de cordon formant un espace clos à l'exception d'ouvertures de remplissage. Les cordons traditionnellement utilisés pour ces applications sont notamment des cordons de butyle ou de silicones.

Pour procéder commodément à ces opérations, la composition coulée est avantageusement choisie de telle sorte que sa viscosité ne soit pas supérieure à 500mPa.s.

Une application particulièrement intéressante des vitrages selon l'invention est la constitution de hublots de marine. Les hublots anti-feu sont traditionnellement constitués d'un vitrage double, le vitrage anti-feu étant tourné vers l'intérieur. L'utilisation de matériaux intumescents présentant d'une part une Tg élevée, et d'autre part d'une épaisseur relativement importante, permet d'éviter l'usage de multiples couches intumescentes associées aux feuilles de verre correspondantes. En conséquence pour une même efficacité les vitrages en question peuvent être relativement plus légers et moins encombrants. Mais surtout la formation directement des vitrages aux dimensions d'utilisation, formation qui est rendue possible par l'introduction du matériau intumescent par coulée, permet la mise en oeuvre de feuilles de verre trempées. Les hublots réglementairement doivent en effet être constitués de feuilles trempées. Les couches séchées directement sur des feuilles de verre nécessitent une découpe ultérieure pour l'élimination des bords. Ces vitrages dont la couche est séchée ne peuvent donc être utilisés, la trempe interdisant toute découpe ultérieure.

La production des vitrages selon l'invention est représentée de façon schématique aux figures annexées dans lesquelles:
- la figure 1 est une vue en perspective d'un vitrage anti-feu élémentaire;
- la figure 2 est un diagramme d'un mode de production de vitrages selon l'invention;
- la figure 3 est un diagramme d'un autre mode de production de vitrages selon l'invention
- la figure 4a, 4b, 4c présentent des vitrages doubles typiques qui peuvent être réalisés selon l'invention.

L'élément de base des vitrages anti-feu transparents est constitué d'une couche intumescente 3, prise entre deux feuilles de verre 1 et 2. Les feuilles de verre sont comme représentées monolithiques ou le cas échéant constituées d'un ensemble feuilleté incluant une feuille intercalaire par exemple de type polyvinylbutyral.

Sur la base de cet élément les vitrages anti-feu commercialisés sont développés notamment en associant dans un même ensemble plusieurs couches intumescentes et plusieurs feuilles de verre, identiques ou différentes selon l'usage envisagé.

Le mode de préparation des couches obtenues par séchage implique une épaisseur réduite pour ne pas accroître de façon excessive le temps de séchage. Celui-ci croît de manière significative avec l'épaisseur de la couche, si bien que pour maintenir ce temps dans des limites industriellement acceptables en pratique les couches produites ne dépassent pas 1 à 2mm. S'il est possible de superposer plusieurs de ces couches il reste cependant que le processus complet conduisant à la formation des ensembles épais devient vite inexploitable de manière économique.

En offrant une composition de matériau intumescent qui peut être coulée avant sa prise en masse, l'invention permet de produire des couches dont l'épaisseur n'est pas limitée par le mode de production de celles-ci. L'épaisseur est fixée par exemple par la distance séparant deux feuilles de verre entre lesquelles la composition est introduite pendant le temps séparant la formation de la composition de la prise en masse.

Certaines applications nécessitent ou sont avantageusement mises en oeuvre avec des couches intumescentes d'épaisseurs très supérieures à celles des couches obtenues par séchage. Ces épaisseurs peuvent atteindre 8, 10 ou même 12mm et plus. Le choix d'épaisseurs plus importantes, constitue notamment une alternative possible aux vitrages constitués de multiples couches intumescentes séparées par autant de feuilles de verre. De tels ensembles sont mis en oeuvre pour des vitrages devant offrir des résistances particulièrement élevées à l'épreuve au feu. Il est connu dans ce sens par exemple des vitrages comportant 5 feuilles de verre associées à 4 couches intumescentes. Mais des vitrages très spéciaux peuvent comprendre encore plus de feuilles. Ces ensembles sont nécessairement très épais et très pesants. La mise en oeuvre de l'invention peut constituer une alternative avantageuse à ces vitrages complexes.

Si l'emploi des compositions intumescentes selon l'invention est envisagé par coulage dans l'espace séparant deux feuilles de verre, cet emploi n'est pas exclusif d'autres types de mise en oeuvre. En particulier la composition peut être coulée sur une feuille horizontale, comportant à sa périphérie un cordon retenant la solution. L'application d'une deuxième feuille de verre étant effectuée ultérieurement, le cas échéant après prise en masse du matériau intumescent. L'assemblage dans ce cas peut être conduit comme pour les couches obtenues par séchage, au moyen d'un calandrage et/ou passage en étuve.

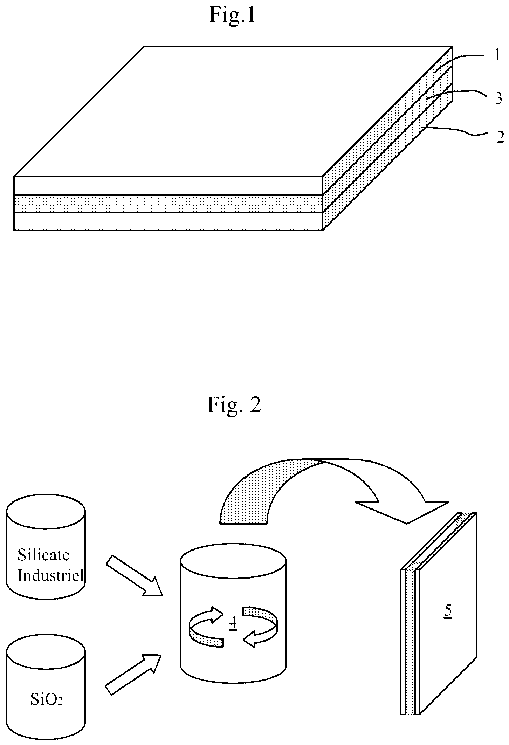

La figure 2 présente de façon schématique les différentes étapes de production d'un vitrage selon l'invention. Ce mode de production comporte la mise en oeuvre de silicates alcalins industriels.

La préparation de la composition fait intervenir le mélange d'un silicate alcalin industriel et de silice colloïdale. Dans ce cas particulier, pour parvenir aux compositions répondant notamment aux conditions de rapport SiO₂/M₂O, et de teneur en eau, le choix est d'utiliser de préférence un silicate présentant un rapport SiO₂/M₂O relativement élevé et dont la teneur en eau est préalablement réduite par exemple par évaporation sous vide, soit de partir d'un silicate dont le rapport est moins élevé, mais contenant en conséquence moins d'eau. Dans les deux cas il est souhaitable d'ajouter la suspension de silice colloïdale la plus concentrée possible pour limiter l'introduction d'eau. Les suspensions commerciales de silice s'établissent avantageusement à une teneur de l'ordre de 50% de silice pour les plus concentrées.

Les proportions relatives de solution de silicate, d'une part et de silice colloïdale d'autre part, sont dictées par les produits de base utilisés pour les préparer. Il s'agit tout en accroissant le rapport molaire du mélange dans le même temps d'aboutir à une solution aussi riche en matière sèche que possible. S'il paraît préférable de partir d'une solution de silicate à faible teneur en eau, comme indiqué ci-dessus, cela conduit à un rapport molaire relativement bas et par suite à la nécessité d'ajouter une quantité importante de silice colloïdale et inversement, mais la silice en suspension introduisant une quantité d'eau qui n'est pas inférieure à environ 50% de la masse ajoutée, on voit que l'optimisation ne permet pas des variations très importantes pour conserver les produits mélangés dans une teneur en eau aussi faible que l'on souhaite. Dans tous les cas l'apport de silice à ces compositions de silicates industriels est relativement important. Il ne peut être inférieur à 25% de la silice totale de la composition finale.

Le mélange est effectué sous agitation pour bien homogénéiser la composition comme représenté en 4. La composition est dégazée pour éliminer les gaz dissous et les bulles éventuellement présentes après ce mélange. L'élimination peut intervenir en laissant simplement la solution au repos ou par toute technique connue telle que l'utilisation d'ultrasons ou le dégazage sous vide par exemple.

A température ambiante ordinaire la préparation reste fluide pendant plusieurs heures. C'est pendant cette période que la composition peut être coulée dans le volume délimité par deux feuilles de verre et un cordon d'étanchéité situé à leur périphérie, comme représenté en 5.

La composition intumescente est stable à environ 4°C. Réfrigérée, elle peut être conservée plusieurs jours sans prendre en masse. A l'inverse une élévation significative de la température favorise une prise en masse rapide. A 50°C, la composition est figée après quelques minutes.

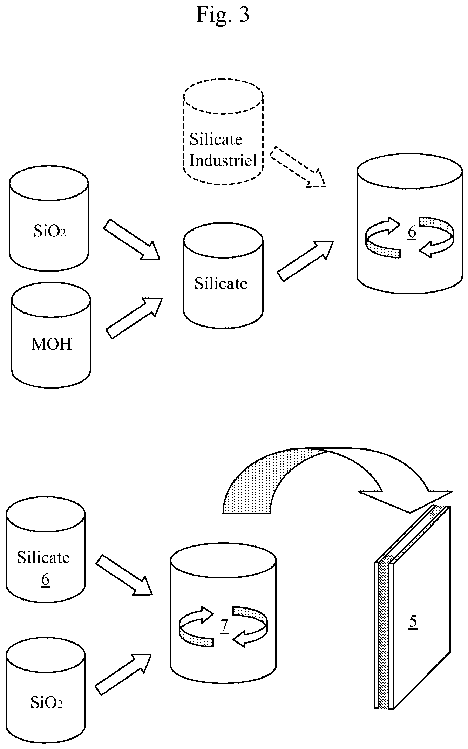

Pour préparer les solutions en question il est aussi possible de ne pas introduire de solution de silicates alcalins industriels, mais de partir de suspension de silice colloïdale et d'hydroxyde alcalin. Le diagramme de la figure 3 illustre cette voie. Le diagramme présente la formation de silicate à partir de suspension colloïdale de silice d'une part et d'hydroxyde alcalin d'autre part.

L'hydroxyde alcalin est soit sous forme de solution soit au moins en partie sous forme de pastilles solides pour limiter le plus possible la teneur en eau du mélange. Les concentrations des solutions d'hydroxyde peuvent être relativement élevées. La teneur en oxydes métalliques atteint 42% en solution et au moins 71% en pastilles.

La reproductibilité des compositions, et la régularité des propriétés des produits obtenus sont d'autant mieux assurées que la préparation des compositions évite l'usage de solutions de silicates industriels. Les silicates industriels commercialisés montrent une certaine irrégularité dans leur comportement pour les mêmes compositions élémentaires apparentes. Néanmoins pour des raisons d'économie, il peut être utile de conserver la mise en oeuvre au moins partielle de silicates alcalins industriels pour la production de ces compositions. Cette variante est indiquée en pointillé sur cette même figure.

Que le silicate soit entièrement ou partiellement formé par réaction de suspension de silice avec l'hydroxyde alcalin, le mélange réalisé noté 6, doit répondre aux conditions de rapport SiO₂/M₂O et teneur en eau indiqués précédemment. Comme précédemment également, la composition finale 7, est obtenue par l'addition de suspension de silice. La composition ainsi réalisée est utilisable comme précédemment notamment en versant dans l'espace délimité par deux feuilles de verre et les joints situés à la périphérie de ces feuilles.

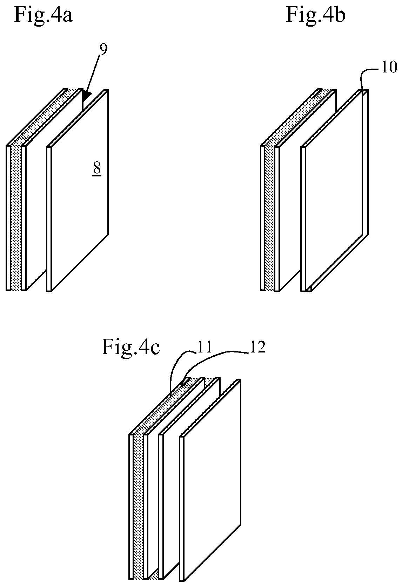

Les figures 4a, 4b, 4c illustrent divers modes de mise en oeuvre de vitrage selon le procédé de l'invention.

La figure 4a présente un vitrage double comprenant en plus du vitrage anti-feu une feuille de verre 8 distante de ce vitrage l'espace 9 entre ces deux ensembles pouvant être ou non rempli d'un gaz utilisé pour ces propriété d'isolation thermique tel que l'argon. Les faces des feuilles tournées vers cet espace peuvent aussi être revêtues de manière connue en soi par des couches minces notamment destinées à faire obstacle aux rayons infrarouges. Des couches connues sont notamment des couches à base d'oxydes, oxyde d'étain éventuellement dopé, oxyde d'indium et d'étain etc.

La figure 4b est analogue à la précédente. La feuille 8 est cette fois feuilletée et composée de deux feuilles de verre réunies au moyen d'une feuille intercalaire 10, typiquement de PVB (polyvinylbutyral). L'avantage de la présence de cet ensemble feuilleté est de conférer une résistance mécanique propre à ce type de produit. En outre la présence de la feuille intercalaire constitue un puissant filtre pour les rayons ultraviolets. La couche intumescente est ainsi protégée contre tout risque de vieillissement indésirable lié à l'exposition à ces UV.

Si l'utilisation de composition "coulables" permet d'accroître l'épaisseur des couches intumescentes, il est possible néanmoins de fractionner la couche, ce qui permet le cas échéant de renforcer encore les caractéristiques anti-feu. La figure 4c présente un vitrage double comportant une partie anti-feu constituée de deux couches intumescentes 11, 12 séparées par une feuille de verre supplémentaire.

Ces exemples ne sont en aucune façon limitatifs. Il en est de même des exemples suivants de modes de préparation des compositions des couches intumescentes selon l'invention.

Divers vitrages fabriqués selon le procédé de l'invention sont soumis à l'épreuve au feu normalisée EN 1364-1.

Les vitrages testés sont de dimensions 500x500mm. Les deux feuilles de verre trempé (140MPa) ont une épaisseur de 6mm. La composition intumescente est coulée entre les feuilles en une épaisseur de 6mm. Les feuilles sont maintenues à distance au moyen d'un écarteur en acier recouverte de cordons de butyle. Les feuilles sont également collées à leur périphérie au moyen d"une colle silicone.

Dans tous ces essais la composition intumescente présente un rapport SiO₂/oxyde alcalin de 3,8. Les compositions sont obtenues soit en incorporant des silicates industriels dédiés (K60) soit des silicates formés par réaction de silice colloïdale et d'hydroxyde de potassium sous forme de solution à 53% ou de pastilles à 85,6%, par plusieurs étapes intermédiaires (SI 1, SI 2, SI 3).

Les compositions apparentes en poids du silicate industriel et de la silice colloïdale (CLX) sont les suivantes:

| | SiO₂/K₂O | SiO₂ % | K₂O % | Na₂O % | Eau % | EG |
|---|---|---|---|---|---|---|
| K60 | 1,44 | 29,0 | 31,0 | 0,3 | 39,7 | |
| CLX | | 45,0 | | 0,2 | 47,8 | 7 |

Les quatre compositions (A,B,C,D) sont obtenues avec les composants en proportions pondérales et conduisent aux compositions présentant les caractéristiques apparentes figurant dans le tableau suivant.

| | Source K | | Si additionnel | | EG | Eau | Compos intermédiaires (SI) ou finales | | |
|---|---|---|---|---|---|---|---|---|---|
| | type | parts | type | parts | parts | parts | SiO₂/K₂O | Eau | EG |
| SI 1 | KOH 53% | 109,2 | CLX | 100 | | | 1,4 | 52,1% | 3,11 |
| SI 2 | KOH 85,6% | 52,3 | SI 1 | 209,2 | | | 0,82 | 47,3% | 2,49% |
| SI 3 | SI 2 | 261,5 | CLX | 77,3 | | | 1,44 | 47,5% | 3,40% |
| A | K60 | 93,6 | CLX | 100 | 2,33 | 25 | 3,80 | 50,0% | 4,00% |
| B | K60 | 93,6 | CLXS | 100 | 1,96 | 16 | 3,80 | 48,0% | 4,00% |
| C | SI 1 | 209,2 | CLX | 166,0 | | | 3,80 | 50,4% | 4,61 |
| D | SI 3 | 338,8 | CLX | 294,3 | | | 3,80 | 47,8% | 4,92% |

Les compositions A et B incorporent des silicates industriels dédiés, les compositions C et D n'en incorporent pas et sont formées progressivement par des compositions intermédiaires, la dernière étape étant l'addition finale de silice.

L'éthylène glycol est introduit avec la silice colloïdale commerciale. Son action dans ces compositions à ces concentrations est peu significative sur les propriétés anti-feu.

Suivant la norme les vitrages ainsi constitués sont considérés du point de vue de l'étanchéité (E) d'une part et de leur rôle isolant d'autre part (EI). Les quatre vitrages montrent une étanchéité qui dépasse les 120 minutes. Le test d'isolation est respectivement : A 36mn, B 39mn, C 30mn, D 32mn. Les différences sont relativement peu sensibles entre les produits obtenus selon les deux modes de production sur les propriétés anti-feu constatées.

Les produits ainsi obtenus ont par ailleurs été essayés pour déterminer leur qualités optiques et le vieillissement de ces qualités à différentes épreuves. Ces produits initialement sont bien transparents. Ils ne présentent pas de voile ("haze"). Ils ne comportent pas non plus de bulles.

Ils sont soumis à un vieillissement accéléré à 80°C et ne présentent pas de voile après 21 jours d'exposition correspondant à une utilisation de 10 ans dans les conditions normales d'utilisation à température ordinaire. De même au test de vieillissement à 60°C sous rayonnement UV (Q-Pannel) on ne décèle pas l'apparition de bulles après 1000 heures d'exposition. Les produits sont donc bien stables dans le temps.

La prolongation de ces épreuves jusqu'à l'apparition d'un voile montre par ailleurs de manière surprenante que pour un même rapport molaire l'apparition d'un voile se produit d'autant plus tard que la concentration en eau est plus importante, contrairement à ce que l'on observe habituellement dans le cas des gels séchés.

## Revendications

1. Procédé de production d'un vitrage anti-feu transparent comprenant au moins une couche intumescente de silicate alcalin hydraté entre deux feuilles de verre, couche dans laquelle le rapport molaire SiO₂/M₂O est d'au moins 3 et est inférieur à 4, la composition conduisant à cette couche obtenue sans séchage, à partir d'une solution de silicate alcalin ce silicate constituée soit de silicate industriel, soit de la réaction de silice colloïdale et d'hydroxyde alcalin, soit d'une combinaison de ces deux types de silicates, solution de silicate alcalin à laquelle est ajoutée une suspension aqueuse de silice colloïdale en quantité telle, que la silice introduite avec cette suspension n'est pas inférieure à 25% de la silice totale dans la couche intumescente.

2. Procédé selon la revendication 1 dans lequel la quantité de silice introduite dans la composition sous forme de suspension aqueuse de silice colloïdale n'est pas inférieure à 35% de la silice totale dans la couche intumescente.

3. Procédé selon la revendication 1 dans lequel la silice provenant de solutions aqueuses de silicates alcalins industriels n'est pas supérieure à 60% de la totalité de la silice présente dans la couche intumescente.

4. Procédé selon la revendication 1 dans lequel la silice provenant de solutions aqueuses de silicates alcalins industriels n'est pas supérieure à 50% de la totalité de la silice présente dans la couche intumescente.

5. Procédé selon l'une des revendications précédentes dans lequel la composition conduisant à la couche intumescente sans séchage est constituée à partir d'une solution aqueuse de silicate alcalin stable à la température ordinaire, dite composition intermédiaire, qui présente un rapport molaire SiO₂/M₂O au plus égal à 2,5, et à laquelle est ajoutée de la silice colloïdale en suspension aqueuse.

6. Procédé selon la revendication 5 dans lequel la composition intermédiaire présente un rapport molaire SiO₂/M₂O de 1,4 à 2.

7. Procédé selon l'une des revendications précédentes dans lequel le matériau constituant la couche intumescente présente une teneur en eau de 40 à 55% en poids.

8. Procédé selon la revendication 7 dans lequel le rapport molaire du matériau constituant la couche intumescente est d'au moins 3,5 et au plus de 3,9

9. Procédé selon la revendication 7 dans lequel le rapport molaire du matériau constituant la couche intumescente est d'au moins 3,6 et au plus de 3,9

10. Procédé selon l'une des revendications précédentes dans lequel la teneur en eau du matériau constituant la couche intumescente est de 44% à 50% en poids.

11. Procédé selon l'une des revendications précédentes dans lequel la teneur en eau du matériau constituant la couche intumescente est de 46% à 48% en poids.

12. Procédé selon l'une quelconque des revendications précédentes dans lequel le matériau constituant la couche intumescente comprend aussi une teneur en glycérine ou en polyol au plus égale à 5% en poids.

13. Procédé selon la revendication 12 dans lequel le matériau constituant la couche intumescente comprend de l'ethylène glycol à une teneur au plus égale à 5% en poids.

14. Procédé selon l'une des revendications précédentes dans lequel le matériau constituant la couche intumescente comprend encore des adjuvants aminés.

15. Procédé selon la revendication 14 dans lequel le matériau constituant la couche intumescente comprend au plus 1% en poids de TMAH (tétraméthyl hydroxy aminé).

16. Procédé selon l'une des revendications précédentes dans lequel la couche intumescente est prise en masse à partir d'une composition fluide coulée dans l'espace délimité par deux feuilles de verre et un joint situé à la périphérie de ces feuilles, l'ensemble formant une cellule étanche après rebouchage des orifices nécessaires à la coulée et à l'élimination du gaz présent.

17. Procédé selon la revendication 16 dans lequel la composition coulée entre deux feuilles de verre présente, au moment de la coulée, une viscosité qui n'est pas supérieure à 500mPa.s.

18. Procédé selon l'une des revendications 16 ou 17 dans lequel la composition coulée, lorsque que tous ses constituants sont rassemblés, présente à la température de 20°C, un temps d'utilisation avant prise en masse qui n'est pas inférieur à 120mn.

19. Procédé selon l'une des revendications précédentes dans lequel la composition conduisant à la couche intumescente est maintenue sous forme fluide en bloquant le développement des colloïdes qui la constituent, en réfrigérant cette composition de manière que sa température n'excède pas 5°C.

20. Procédé selon l'une des revendications précédentes dans lequel les feuilles de verre sont en verre trempé.

21. Procédé selon la revendication précédente entrant dans la composition de vitrages multiples utilisés pour constituer des hublots de navires.

## Patentansprüche

1. Verfahren zur Herstellung einer transparenten Brandschutzverglasung, umfassend mindestens eine blähfähige Schicht aus wasserhaltigem Alkalisilikat zwischen zwei Glasscheiben, wobei in der Schicht das Molverhältnis SiO₂/M₂O mindestens 3 und kleiner als 4 ist, wobei die Zusammensetzung zu dieser Schicht ohne Trocknen erhalten aus einer Alkalisilikatlösung führend, dieses Silikat entweder aus Industriesilikat oder aus der Reaktion von kolloidalem Siliziumdioxid und Alkalihydroxid oder einer Kombination dieser zwei Silikattypen gebildet ist, wobei zu der Alkalisilikatlösung eine wässerige Suspension von kolloidalem Siliziumdioxid in einer derartigen Menge hinzugefügt wird, dass das mit dieser Suspension eingeführte Siliziumdioxid nicht unter 25 % des Gesamtsiliziumdioxids in der blähfähigen Schicht liegt.

2. Verfahren nach Anspruch 1, bei dem die in die Zusammensetzung in Form einer wässrigen Lösung von kolloidalem Siliziumdioxid eingeführte Siliziumdioxidmenge nicht unter 35 % des Gesamtsiliziumdioxids in der blähfähigen Schicht liegt.

3. Verfahren nach Anspruch 1, bei dem das aus wässerigen Lösungen von Industriealkalisilikaten stammende Siliziumdioxid nicht über 60 % der in der blähfähigen Schicht vorhandenen Gesamtsiliziumdioxidmenge liegt.

4. Verfahren nach Anspruch 1, bei dem das aus wässerigen Lösungen von Industriealkalisilikaten stammende Siliziumdioxid nicht über 50 % der in der blähfähigen Schicht vorhandenen Gesamtsiliziumdioxidmenge liegt.

5. Verfahren nach einem der vorhergehenden Ansprüche, bei dem die Zusammensetzung, die zu der blähfähigen Schicht ohne Trocknen führt, aus einer wässerigen Alkalisilikatlösung, die bei Umgebungstemperatur stabil ist, Zwischenzusammensetzung genannt, gebildet ist, die ein Molverhältnis SiO2/M2O höchstens gleich 2,5 aufweist, und zu der kolloidales Siliziumdioxid in wässriger Suspension hinzugefügt wird.

6. Verfahren nach Anspruch 5, bei dem die Zwischenzusammensetzung ein Molverhältnis SiO2/M2O von 1,4 bis 2 aufweist.

7. Verfahren nach einem der vorhergehenden Ansprüche, bei dem das Material, aus dem die blähfähige Schicht besteht, einen Wassergehalt von 40 bis 55 Gew.-% aufweist.

8. Verfahren nach Anspruch 7, bei dem das Molverhältnis des Materials, aus dem die blähfähige Schicht besteht, mindestens 3,5 und höchstens 3,9 beträgt.

9. Verfahren nach Anspruch 7, bei dem das Molverhältnis des Materials, aus dem die blähfähige Schicht besteht, mindestens 3,6 und höchstens 3,9 beträgt.

10. Verfahren nach einem der vorhergehenden Ansprüche, bei dem der Wassergehalt des Materials, aus dem die blähfähige Schicht besteht, 44 bis 50 Gew.-% beträgt.

11. Verfahren nach einem der vorhergehenden Ansprüche, bei dem der Wassergehalt des Materials, aus dem die blähfähige Schicht besteht, 46 bis 48 Gew.-% beträgt.

12. Verfahren nach einem der vorhergehenden Ansprüche, bei dem das Material, aus dem die blähfähige Schicht besteht, auch einen Gehalt an Glycerin oder Polyol höchstens gleich 5 Gew.-% umfasst.

13. Verfahren nach Anspruch 12, bei dem das Material, aus dem die blähfähige Schicht besteht, Ethylenglykol mit einem Gehalt höchstens gleich 5 Gew.-% umfasst.

14. Verfahren nach einem der vorhergehenden Ansprüche, bei dem das Material, aus dem die blähfähige Schicht besteht, ferner aminierte Hilfsstoffe umfasst.

15. Verfahren nach Anspruch 14, bei dem das Material, aus dem die blähfähige Schicht besteht, höchstens 1 Gew.-% TMAH (Tetramethylammoniumhydroxid) umfasst.

16. Verfahren nach einem der vorhergehenden Ansprüche, bei dem die blähfähige Schicht aus einer flüssigen Zusammensetzung abgebunden wird, die in den von zwei Glasscheiben und einer Dichtung an der Peripherie dieser Scheiben begrenzten Raum gegossen wird, wobei die Gesamtheit eine dichte Zelle nach dem Wiederverschließen der Öffnungen, die für das Gießen und die Beseitigung des vorhandenen Gases notwendig sind, bildet.

17. Verfahren nach Anspruch 16, bei dem die zwischen zwei Glasscheiben gegossene Zusammensetzung zum Zeitpunkt des Gießens eine Viskosität von nicht mehr als 500 mPa.s aufweist.

18. Verfahren nach einem der Ansprüche 16 oder 17, bei dem die gegossene Zusammensetzung, wenn alle ihre Bestandteile vereint sind, bei der Temperatur von 20°C eine Verwendungszeit vor Abbinden von nicht weniger als 120mn aufweist.

19. Verfahren nach einem der vorhergehenden Ansprüche, bei dem die Zusammensetzung, die zu der blähfähigen Schicht führt, in flüssiger Form gehalten wird, wobei die Entwicklung der Kolloide, aus denen sie besteht, blockiert wird, indem diese Zusammensetzung gekühlt wird, so dass ihre Temperatur 5°C nicht überschreitet.

20. Verfahren nach einem der vorhergehenden Ansprüche, bei dem die Glasscheiben aus gehärtetem Glas sind.

21. Verfahren nach dem vorhergehenden Anspruch, das bei der Zusammensetzung von Mehrfachverglasungen angewandt wird, die verwendet werden, um Schiffsluken zu bilden.

## Claims

1. Process for the production of a transparent fire-resistant glazing comprising at least one intumescent layer of hydrated alkali metal silicate between two glass sheets, in which layer the SiO₂/M₂O molar ratio is at least 3 and is less than 4, the composition resulting in this layer being obtained, without drying, from an alkali metal silicate solution, this silicate formed either of industrial silicate, or of the reaction of colloidal silica and alkali metal hydroxide, or a combination of these two types of silicates, to which alkali metal silicate solution is added an aqueous suspension of colloidal silica in an amount such that the silica introduced with this suspension is not less than 25% of the total silica in the intumescent layer.

2. Process according to Claim 1, in which the amount of silica introduced into the composition in the form of aqueous suspension of colloidal silica is not less than 35% of the total silica in the intumescent layer.

3. Process according to Claim 1, in which the silica originating from aqueous solutions of industrial alkali metal silicates is not greater than 60% of all of the silica present in the intumescent layer.

4. Process according to Claim 1, in which the silica originating from aqueous solutions of industrial alkali metal silicates is not greater than 50% of all of the silica present in the intumescent layer.

5. Process according to one of the preceding claims, in which the composition resulting in the intumescent layer without drying is formed from an aqueous solution of alkali metal silicate which is stable at ordinary temperature, referred to as intermediate composition, which exhibits a SiO2/M2O molar ratio at most equal to 2.5 and to which colloidal silica in aqueous suspension is added.

6. Process according to Claim 5, in which the intermediate composition exhibits a SiO2/M2O molar ratio from 1.4 to 2.

7. Process according to one of the preceding claims, in which the material forming the intumescent layer exhibits a water content of 40% to 55% by weight.

8. Process according to Claim 7, in which the molar ratio of the material forming the intumescent layer is at least 3.5 and at most 3.9.

9. Process according to Claim 7, in which the molar ratio of the material forming the intumescent layer is at least 3.6 and at most 3.9.

10. Process according to one of the preceding claims, in which the water content of the material forming the intumescent layer is from 44% to 50% by weight.

11. Process according to one of the preceding claims, in which the water content of the material forming the intumescent layer is from 46% to 48% by weight.

12. Process according to any one of the preceding claims, in which the material forming the intumescent layer also comprises a glycerol or polyol content at most equal to 5% by weight.

13. Process according to Claim 12, in which the material forming the intumescent layer comprises ethylene glycol at a content at most equal to 5% by weight.

14. Process according to one of the preceding claims, in which the material forming the intumescent layer also comprises amine adjuvants.

15. Process according to Claim 14, in which the material forming the intumescent layer comprises at most 1% by weight of TMAH (tetramethylammonium hydroxide).

16. Process according to one of the preceding claims, in which the intumescent layer is set solid starting from a liquid composition poured into the space delimited by two glass sheets and a seal located at the periphery of these sheets, the assembly forming a leaktight cell after reblocking the orifices necessary for the pouring and for the removal of the gas present.

17. Process according to Claim 16, in which the composition poured between two glass sheets exhibits, at the time of the pouring, a viscosity which is not greater than 500 mPa.s.

18. Process according to either of Claims 16 and 17, in which the poured composition, when all the constituents are gathered together, exhibits, at a temperature of 20°C, a pot life before setting solid which is not less than 120 min.

19. Process according to one of the preceding claims, in which the composition resulting in the intumescent layer is kept in the fluid form by blocking the growth of the colloids which form it, by refrigerating this composition so that its temperature does not exceed 5°C.

20. Process according to one of the preceding claims, in which the glass sheets are made of tempered glass.

21. Process according to the preceding claim, participating in the making of multiple glazings used to form portholes for ships.
